# EUROPÄISCHE PATENTSCHRIFT

(11) **EP 1 186 497 B1**
(45) Veröffentlichungstag und Bekanntmachung des Hinweises auf die Patenterteilung: **29.03.2006**
(21) Anmeldenummer: 01121239.6
(22) Anmeldetag: 05.09.2001
(51) Int. Cl.: B61C 7/04, B61C 9/38, B61C 3/00, B61C 5/00

(54) **Schienentriebfahrzeug mit Energieversorgungssystem**
Railway vehicle with power supply system
Véhicule ferroviaire avec système d' alimentation en énergie

(30) Priorität: 12.09.2000 DE 10045319
(43) Veröffentlichungstag der Anmeldung: 13.03.2002
(73) Patentinhaber: ALSTOM LHB GmbH, 38239 Salzgitter (DE)
(72) Erfinder: Engel, Bernd, Dr.-Ing., 38302 Wolfenbüttel (DE); Söffker, Carsten, Dipl.-Ing., 38300 Wolfenbüttel (DE)

(56) Entgegenhaltungen:
- EP-A- 0 630 789
- EP-A- 0 633 173
- DE-A- 19 819 094
- LENHARD D ET AL: "ELEKTRISCHE AUSRUESTUNG DES TRIEBZUGES LIREX BAUREIHE 618/619 FUER DB REGIO" ELEKTRISCHE BAHNEN, OLDENBOURG VERLAG. MUNCHEN, DE, Bd. 98, Nr. 8, August 2000 (2000-08), Seiten 279-280,282,284-289, XP000959112 ISSN: 0013-5437

## Beschreibung

Die Erfindung betrifft ein Schienentriebfahrzeug mit Energieversorgungssystem nach dem Oberbegriff des Anspruches 1.

Bis auf wenige Ausnahmen tragen die meisten Triebzüge für Vollbahnen wesentliche Antriebskomponenten wie Dieselmotor oder Transformatoren und Umrichter unterflur. Eine bekannte Ausführung ist in eb-Elektrische Bahnen97 (1999), Heft 5, S. 171-177 beschrieben. Durch den Trend zu niederflurigen Fahrzeugen, um dem Fahrgast und hier insbesondere mobilitätseingeschränkten Personen eine besser Zugang zum Fahrzeug zu gewähren, sind bei einigen wenigen Fahrzeugen wesentliche Antriebskomponenten auf dem Dach untergebracht. Beim Triebzug NINA (Schweizer Eisenbahn-Revue 1999, Heft 1, S. 19-36) sind z. B. Transformatoren und Umrichter auf dem Dach montiert.

Aus der Fachzeitschrift "Elektrische Bahnen, 98 (2000) 8, Seiten 279 bis 289" ist ein weiteres Schienenfahrzeug mit Anordnung von Antriebskomponenten auf dem Fahrzeugdach bekannt um den Forderungen der Verkehrsbetriebe noch Niederflurigkeit der Fahrzeuge nachkommen zu können. Gezeigt ist ein 6-teiliger Triebzug, der in Grundausstattung einen dieselelektrischen Antrieb mit Anordnung von vier Verbrennungskraftmaschinen mit zugehörigem Generator (Diesel-Powerpacks) aufweist. Eine dargestellte Variante mit Oberleitungs-Energieversorgungsmodul für reinen Oberleitungsbetrieb soll durch Austausch der beiden Diesel-Powerpacks auf den beiden Endwogen und Wegfall der beiden übrigen Diesel-Powerpacks erfolgen. Bei einer weiteren, dargestellten Variante wird ein Hybrid-Betrieb (mit wahlweisem Diesel- und Elektro-Modus) vorgeschlagen. In dieser Betriebsart soll ein Diesel-Powerpack durch ein Oberleitungs-Energieversorgungsmodul ausgetauscht werden. Die Diesei-Powerpocks werden als leicht tauschbare Module auf einem Trograhmen vorgeschlagen. Ein Oberleitungs-Energieversorgungsmodul soll am Platz eines Diesel-Powerpocks installiert werden. Wie das hohe Gewicht und Volumen eines Oberleitungs-Energieversorgungsmoduls, insbesondere wegen des Gewichts eines herkömmlichen Transformators für die Hochspannung der Oberleitung, im knappen Einbouroum am Platz des Diesel-Powerpacks im Fahrzeug und innerhalb der Statik eingebunden werden soll, ist nicht dargestellt und bleibt ungelöst. Auch die Heranführung der Hochspannung an das Oberleitungs-Energieversorgungsmodul über einen Stromabnehmer ist nur prinzipiell angedeutet und muss unter Berücksichtigung der Modulbouweise gelöst werden.

Aus der DE 198 19 094 A1 ist ein Schienenfahrzeugkonzept bekannt, das zur Bildung eines Zuges in modularer Bauweise Verbindungsdrehgestelle, darauf aufsetzbare Versorgungseinheiten, Steuereinheiten und Transporteinheiten aufweist. Das teilbare Verbindungsdrehgestell weist mindestens eine elektrische Antriebs/Bremseinheit auf. Die zwischen zwei Tronsporteinheiten angeordneten Versorgungseinheiten enthalten die notwendigen Einrichtungen, wie Stromabnehmer, Transformator und Stromrichter zur Stromentnahme aus einer Fohrieitung. Die Schnittstellen aller Einheiten sind einheitlich und so gestaltet, dass ein einfaches und schnelles Austauschen der Einheiten möglich ist. Ein Betrieb mittels Verbrennungskraftmaschinen oder ein Hybridbetrieb ist nicht vorgesehen. Über die Anordnung der Einrichtungen innerhalb der Versorgungseinheit ist nichts Konkretes vorgeschlagen.

Der Erfindung liegt die Aufgabe zugrunde, ein Fahrzeugkonzept zu enlwickeln, das die vorgenannten Mängel beseitigt und für Schienentriebfahrzeuge eine aufwandsarme Anpassung bzw. Umrüstung der fahrzeugseitigen Energieversorgungsanlagen verbessert.

Diese Aufgabe wird durch das in Anspruch 1 gekennzeichnete Schienentriebfahrzeug gelöst.

Durch dos neuartige Fahrzeugkonzept und die dazugehörige Komponenten wird eine Modularität bei der Energieversorgung mit folgenden Vorteilen geschaffen:
- Der Triebzug läßt sich bei der Herstellung entweder mit einer Energieversorgung auf der Basis eines Verbrennungsmotors (Dieselmotor) für Strecken ohne elektrische Oberleitung, für elektrischen Oberleitungsbetrieb oder mit neuen, innovativen Energieversorgungssystemen wie z.B. mit Brennstoffzelle ausrüsten. Der wesentliche Teil des Fahrzeugs bleibt gleich und senkt damit die Herstellungs- und Wartungskosten.
- Durch weitgehend gleiche Schnittstellen läßt sich ein Fahrzeug mit relativ geringem Aufwand innerhalb weniger Stunden bzw. Tage von einem Energieversorgungssystem auf ein anderes umrüsten (z. B. vom Dieseitriebwagen zum elektrischen Oberleitungstriebwagen und umgekehrt).
- Durch die Modularität ist es gleichfalls möglich, sogenannte Hybridtriebwagen zu realisieren, mit denen sowohl z. B. ein verbrennungsmotorischer Betrieb als auch ein elektrischer Oberleitungsbetrieb möglich ist.

Die Erfindung wird nachfolgend anhand von Ausführvngsbeispielen mit Bezug auf die Zeichnung näher erläutert. Es zeigen
- Fig. 1: ein schematische Darstellung eines Schienentriebfohrzeuges mit drei verschiedenen Energieversorgungsanlagen (Diesel-Powerpack , Oberleitungsbetrieb und Brennstoffzelle);
- Fig. 2: eine schematische Darstellung eines Schienentriebfahrzeuges mit vier Diesel-Powerpacks; diese Anordung ist kein Ausführungsbeispiel der Erfindung;
- Fig. 3: eine schematische Darstellung einer Ausführung des Schienentriebfahrzeuges mit zwei Oberleitungsenergieversorgungsmodulen;
- Fig. 4: eine schematische Darstellung einer Ausführung des Schienentriebfahrzeuges als Hybridfahrzeug mit einem Oberleitungsenergieversorgungsmodul und drei Diesel-Powerpacks und
- Fig. 5: eine schematische Darstellung eines Oberleitungsenergieversorgungsmoduls.

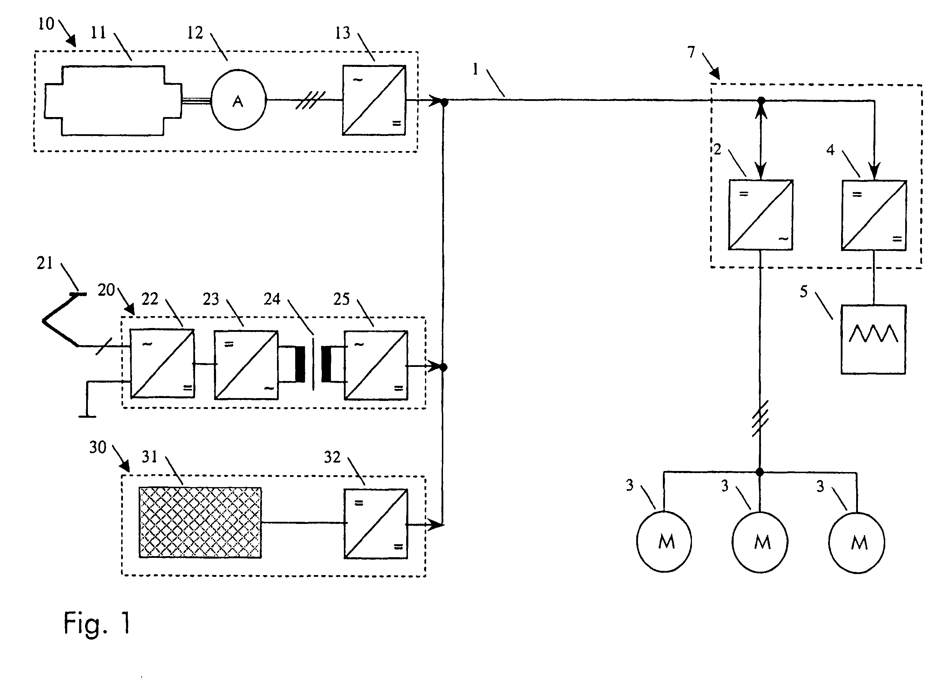

Die Modularität wird dadurch ermöglicht, dass beim verbrennungsmotorisch betriebenen Fahrzeug (hier ein Dieselfahrzeug) eine elektrische Leistungsübertragung gewählt wird, so dass der Gleichspannungszwischenkreis 1 als Schnittstelle auch für andere Energieversorgungsanlagen dienen kann (Fig. 1).

Im einzelnen besteht das dieselelektrische Antriebssystem aus einem Dieselmotor 11, einem Generator 12, einem Gleichrichter 13, einem Gleichspannungszwischenkreis 1, einem Wechselrichter 2, Fahrmotoren 3, einem Bremssteller 4 und einem Bremswiderstand 5. Dieselmotor 11, Generator 12 und Gleichrichter 13 bilden mit einigen Nebenkomponenten das sogenannte Diesel-Powerpack. Durch Bremssteller 4 und Bremswiderstand 5 ist ein verschleißfreies, generatorisches Bremsen möglich.

Im Falle des elektrischen Oberleitungsbetnebes besteht die Energieversorgung 20 traditionell aus einem Transformator 24, der die Hochspannung 15 kV / 16,7 Hz bzw. 25 kV / 50 Hz auf einer Spannung auf ca. 1000 V herunterspannt. Danach folgt ein Vierquadrantensteller 25, der den Wechselstrom gleichrichtet.

Eine vorteilhafte Ausgestaltung der Erfindung ist eine Verwendung einer neuartigen, massearmen Energieversorgung 20 für Oberleitungsbetrieb. Dabei wird der Transformator 24 nicht mit einem Wechselfluß von 16,7 Hz oder 50 Hz durchflutet, sondern es wird mit einem primärseitigen Hochspannungsumrichter 22, 23 eine Mittelfrequenz im Transformator 24 erzeugt, so daß das Transformatorgewicht und - volumen deutlich sinken. Sekundärseitig muß der Vierquadrontensteller 25 auf die höhere Übertragungsfrequenz angepaßt werden.

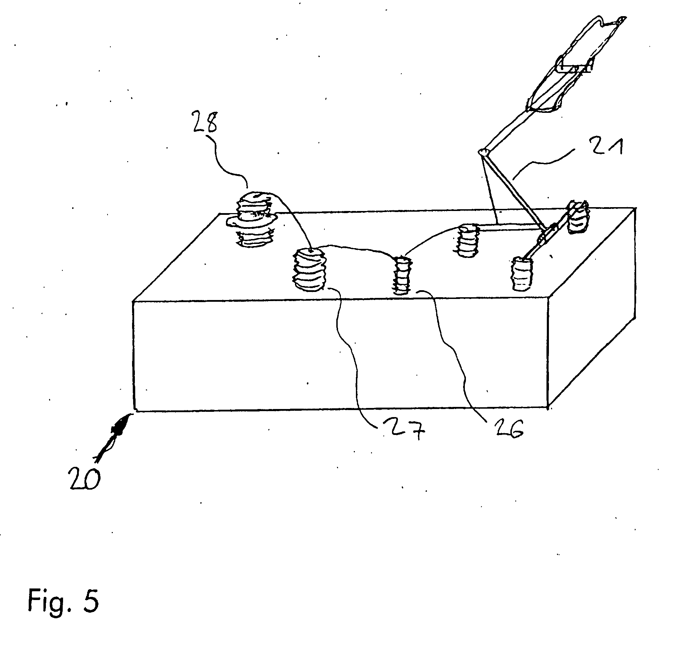

Durch die Verwendung dieser masseormen Energieversorgung 20 ist eine neue Anordnung der Hochspannungskomponenten möglich, so dass ein Energieversorgungsmodul 20 (Fig. 5) entsteht, das dem Powerpack beim Dieselfahrzeug in Anschlußmaßen, den Abmessungen und in den Schnittstellen weitgehend ähnelt. Dadurch werden die Erfindungsziele besonders vorteilhaft gefördert.

Im einzelnen wird auf das Gehäuse der massearmen Energieversorgung 20 die üblichen Hochspannungskomponenten wie z. B. der Pantograph 21, Überspannungsabteiter 26, Oberspannungstrafo 27 und Vakuum-Hauptschalter mit Erdungseinrichtung 28 integriert.

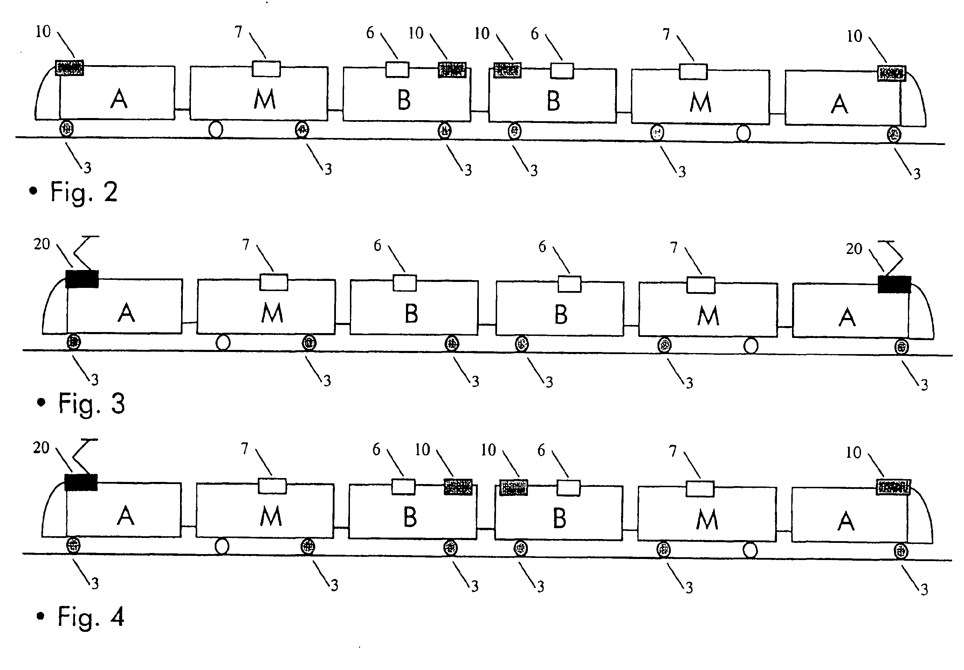

Als weitere Lösungsmöglichkeit können gemäß Fig. 4 auch innovative Energieversorgungsysteme 30 wie die Brennstoffzelle 31, die als Schnittstelle zum Gleichspannungszwischenkreis (1) einen Gleichstromsteller (32) besitzen kann, eingesetzt werden.

## Patentansprüche

1. Schienentriebfohrzeug mit einem Oberteitungs-Energieversorgungsmodul (20) und gegebenenfalls mit weiteren Energieversorgungsmodulen wie Verbrennungsmotor-Modul, Diesel-Powerpack (10) oder Brennstoffzellen-Modul (31), welche auf dem Fahrzeugdach angeordnet sind, welche gleiche Schnittstellen zum nachfolgenden Antriebsstrang über einen Gleichsponnungszwischenkreis (1) besitzen und welche weitgehend ähnliche Anschlussmaße und mechanische Abmessungen oufweisen, so dass eine aufwandsarme Tauschbarkeit bzw. Umrüstbarkeit von artverschiedenen Energieversorgungsmodulen ohne einen aufwendigen Umbau des Fahrzeuges gegeben ist, **dadurch gekennzeichnet, dass** auf dem Oberleitungs-Energieversorgungsmodul (20) das Hochspannungselement Pantograph (21) angeordnet ist und dass das Oberleitungs-Energieversorgungsmodul (20) einen masseormen Mittelfrequenz-Transformator (24) aufweist, bei dem über einen primärseitigen Hochspannungsumrichter (22, 23) im Transformator (24) eine Mittelfrequenz erzeugt wird, wodurch der Mittelfrequenz-Transformator (24) gegenüber herkömmlichen 15kV/16,7 Hz oder 25 kV/50 Hz Transformatoren mit deutlich reduziertem Gewicht und Volumen ausbildbar ist, und dem sekundärseitig Mittetfrequenz-Transformator (24) ein an die höhere Übertragungsfrequenz angepasster Vierqu adrantensteller (25) nachgeschaltet ist.

## Claims

1. Railway traction vehicle with an overhead line power supply module (20) and if necessary with further energy supply modules such as a combustion engine module, diesel power pack (10) or fuel cell module (31), which are arranged on the vehicle roof and have the same interfaces to the subsequent drive train via a direct voltage intermediate circuit (1) and which have substantially similar connection measurements and mechanical dimensions, so it is possible, with low outlay, to exchange or convert energy supply modules which are different in type without complex alteration to the vehicle, **characterised in that** the high voltage element pantograph (21) is arranged on the overhead line power supply module (20) and **in that** the overhead line energy supply module (20) has a low-mass middle frequency transformer (24), in which a middle frequency is generated by a primary-side high voltage converter (22, 23) in the transformer (24), whereby the middle frequency transformer (24) can be configured with a clearly reduced weight and volume compared to conventional 15kV/16.7 Hz or 25 kV/50 Hz transformers, and a four quadrant actuator (25) adapted to the higher transmission frequency is connected downstream from the secondary-side middle frequency transformer (24).

## Revendications

1. Véhicule ferroviaire automoteur avec un module d'alimentation en énergie à ligne aérienne (20) et éventuellement avec d'autres modules d'alimentation en énergie tels qu'un module à moteur à combustion interne, un bloc d'alimentation diesel (10) ou un module à combustible (31) qui sont disposés sur le toit du véhicule, qui ont des interfaces identiques avec la branche d'entraînement suivante, par l'intermédiaire d'un circuit intermédiaire à tension continue (1), et qui présentent des cotes de raccordement et des dimensions mécaniques en grande partie similaires, ce qui permet de changer sans grande dépense ou de convertir des modules d'alimentation en énergie de types différents sans transformation compliquée du véhicule, **caractérisé en ce qu'**il est prévu sur le module d'alimentation en énergie à ligne aérienne (20) l'élément à haute tension constitué par le pantographe (21) et que le module d'alimentation en énergie à ligne aérienne (20) comporte un transformateur de fréquence moyenne à faible masse (24), une fréquence moyenne étant produite dans le transformateur (24) par l'intermédiaire d'un convertisseur de haute tension à faible masse (22, 23) prévu côté primaire, moyennant quoi le transformateur de fréquence moyenne (24) peut présenter un poids et un volume nettement réduits par rapport aux transformateurs classiques 15 kV/16,7 Hz ou 25 kV/50 Hz, et un actionneur à quatre quadrants (25) adapté à la fréquence de transmission plus élevée est monté en aval du transformateur de fréquence moyenne (24) prévu côté secondaire.
